# EUROPEAN PATENT SPECIFICATION

(11) **EP 2 373 593 B1**
(45) Date of publication and mention of the grant of the patent: **15.04.2015**
(21) Application number: 09771590.8
(22) Date of filing: 11.12.2009
(51) Int. Cl.: C04B 28/00, C04B 40/06, C08G 18/76, C08K 3/36, C04B 28/26, C08G 18/20, E21D 20/02, C04B 103/00, C04B 111/00

(54) **PROCESS FOR PREPARING SILICATE ISOCYANATE**
PROZESS ZUR HERSTELLUNG VON SILICAT-ISOCYANAT
PROCEDE POUR PRODUIRE ISOCYANATE DE SILICATE

(30) Priority: 11.12.2008 GB 0822553
(43) Date of publication of application: 12.10.2011
(60) Divisional application: 14184732.7
(73) Proprietor: Minova International Limited, Barnsley South Yorkshire S75 1JN (GB)
(72) Inventor: CZYSOLLEK, Oliver, 45307 Essen (DE); KRIZANOVIC, Olga, 45307 Essen (DE); SAMEK, Petra, 45307 Essen (DE); TATZKI, Thorsten, 45307 Essen (DE); EIGEMANN, Ernst, 45307 Essen (DE); FISCHER, Martin, 45307 Essen (DE)
(74) Representative: Foster, Simon
(86) International application number: PCT/GB2009/051697
(87) International publication number: WO 2010/067126

(56) References cited:
- EP-A1- 0 005 988
- EP-A1- 0 837 081
- AU-B2- 648 152
- US-A- 3 607 794
- US-A- 3 698 196
- US-A- 5 093 416

## Description

The present invention relates to a process of preparing a storage stable composition comprising a silicate powder and an isocyanate.

Two component silicate isocyanate systems are well known. US 3,607,794 (Conteki) describes the formation of such systems based on the chemical reaction of isocyanate groups with aqueous solutions of alkali metal silicates. It involves a complex reaction.

A disadvantage of such a system is that the two components, the aqueous alkali metal silicate solution and the isocyanate, must be stored separately and mixed at the point of use.

The modification of isocyanate prepolymers with silane compositions is known to lead to non-foaming systems (SPUR resins). However, it is time-consuming and expensive. In particular, silanes are very expensive and the process by which they are chemically bound to isocyanates and prepolymers is difficult to carry out.

Improved silicate isocyanates have been sought.

According to the present invention there is provided a process for preparing a storage stable composition, the process comprising the steps of:
(i) oven drying a potassium silicate and/or sodium silicate for 4-5 hours at 400°C to form a silicate powder having a water content of substantially 0%w/w, and
(ii) mixing the silicate powder with an isocyanate.

In the potassium silicate and/or sodium silicate powder according to the invention, the amount by weight of water is a percentage by weight relative to the weight of potassium silicate and/or sodium silicate powder. By providing a composition in which the potassium silicate and/or sodium silicate has a water content of substantially 0%w/w, the hardening reaction between the silicate and the isocyanate can be delayed or will only proceed sufficiently slowly such that the composition can be transported to the point of use before the hardening reaction has proceeded to such an extent that the composition cannot be applied at the point of use. Water can be added as a liquid or by exposure to ambient humidity to initiate and/or complete the hardening reaction. This is simpler than the prior art methods that use two separate reactive liquid components, and is more straightforward due to water generally being easily available and readily transported to the point of use.

The compositions of the present invention are suitable for use in adhesives, coatings and mortars for many different applications.

In particular, by providing a potassium silicate and/or sodium silicate having a water content of substantially 0%w/w the hardening reaction between the silicate and the isocyanate can substantially be prevented from taking place until water is added. The water content of component (i) of the composition of the invention is determined as a percentage by weight of component (i). In some embodiments, a water content of substantially 0%w/w is a water content which is sufficiently low to provide a composition which is storage stable. For example, it is a water content which can be obtained by oven drying a potassium silicate and/or sodium silicate powder for 4-5 hours at a temperature of about 400°C.

In some embodiments the composition is non-foaming. An advantage of the non-foaming composition according to the invention is that it is easier and cheaper to produce than the known SPUR resin system. A further advantage is that the composition can be used in a wider range of applications.

In some embodiments, the potassium silicate and/or sodium silicate powder has a particle size which is sufficiently small to allow intimate mixing with the isocyanate to permit a substantially homogeneous hardening reaction of the composition when exposed to water. Advantages of such an embodiment include that a resin may be obtained having substantially uniform properties, that the composition may be easier to spread on a surface and any CO₂ generated during the hardening reaction is retained in the composition. A skilled person would be able to determine a suitable median principal dimension for the particle size; for example particles having a median principal dimension of 0.02mm-0.4mm may be used.

In some embodiments, the molecular ratio of SiO₂ to K₂O in the silicate powder is from 0.5:1 to 4.1:1, for example 2.6:1 - 4.1:1. In some embodiments, the molecular ratio of SiO₂ to K₂O in the silicate powder is from 0.6:1 to 3.4:1, for example 2.6:1 - 3.4:1.

In some embodiments, the molecular ratio of SiO₂ to Na₂O in the silicate powder is from 0.5:1 to 4.1:1, for example 1.6:1 - 4.4:1. In some embodiments, the molecular ratio of SiO₂ to Na₂O in the silicate powder is from 0.6:1 to 2.5:1, for example 1.6:1 - 2.5:1. In some embodiments, the defined ratios may be a molar ratio.

In some embodiments, the isocyanate is an aliphatic, cycloaliphatic, araliphatic (ie an aliphatic compound with an aromatic group), aromatic or heterocyclic isocyanate, a distillation residue (ie a higher valence material that cannot be distilled) with isocyanate groups or an isocyanate prepolymer. The isocyanate used in the present invention will be determined in part by the use for which the composition is intended. Generally, any known isocyanate may be used in the invention. A skilled person would be able to determine a suitable isocyanate. In some embodiments, the isocyanate is diphenylmethane-4,4'-diisocyanate (MDI). In some embodiments, the MDI is MDI prepolymer (ie an MDI that is prereacted so that it has a reduced number of NCO groups) or polymeric MDI. In some embodiments, the isocyanate is a powder.

In some embodiments the composition may comprise:
(i) 5-40%w/w, preferably 5-20%w/w, potassium silicate and/or sodium silicate powder having a water content of substantially 0%w/w,
(ii) 5-50%w/w isocyanate,
(iii) 0-1%w/w emulsifier/thixotropic agent,
(iv) 30-90%w/w filler, preferably 30-70%w/w,
(v) 0-10%w/w plasticiser,
(vi) 0-3%w/w catalyst,
(vii) 0-5%w/w flame retardant, and
(viii) 0-10%w/w gelling agent.
wherein the total amount of components (i)-(viii) is 100%w/w. In some embodiments, the composition may consist essentially of these components. The term "consist essentially of" is used to mean that any additional components are present in an amount that does not significantly affect the tensile strength, bending strength, adhesive and/or coating properties of the composition.

In the composition according to the invention, the amount by weight of each of the components is a percentage by weight of the composition. In some embodiments, the filler may be an inert material such that it does not react with components (i) and (ii) of the composition. The type of filler and/or the amount of filler used may be selected depending upon how the composition is to be used. For example, more filler can be used in order to provide a more brittle resin or less filler can be used in order to provide more flexible resin. The type of filler and/or the amount of filler used may easily be determined by a person of skill in the art; for example, the filler may be Al(OH)₃ (for example as a powder), Al₂O₃, AlO(OH), sand (for example silica sand), sandstone, limestone, CaCO₃ and/or quartz powder. In some embodiments, the granulation range of the quartz powder is 0-0.5mm. In some embodiments, a suitable quartz powder is Silimix 260 sold by Euroquarz GmbH.

In some embodiments, the emulsifier/thixotropic agent may be an inert material that stabilises and/or thickens the composition. The type and/or amount of emulsifier/thixotropic agent used depends upon how the composition is to be used and may easily be determined by a person of skill in the art; for example, the emulsifier/thixotropic agent may be a pyrogenic silica such as those sold under the trademark HDK by Wacker (although other HDK types can be used) or hydrated castor oil.

In some embodiments, the plasticiser may be an inert material that is selected to provide plastic properties appropriate for the way in which the composition is to be used. The amount of plasticiser used may be from 0 to 5%w/w in some embodiments. For example, the amount and/or type of the plasticiser used can be selected depending upon how the composition is to be used. For example, less plasticiser can be used in order to provide a more brittle resin or more plasticiser can be used in order to provide a more flexible resin. The amount and/or type of plasticiser used may easily be determined by a person of skill in the art; for example, the plasticiser may be diethylhexyl adipate (DEHA), triethyl phosphate (TEP), butyl diglycolacetate (BDGA), tris(2-chloropropyl) phosphate (TCPP), dibasic ester (DBE) such as diethyl malonate (DEM), an ester of a carboxylic acid and/or a fatty acid ester.

In some embodiments, the amount and/or type of the flame retardant used depends upon the use of the composition. In some embodiments, if a substantial amount of filler is present, a flame retardant may not be necessary as the filler will retard combustion of the composition. For a more flexible resin having less filler, a flame retardant may be necessary. The amount and/or type of flame retardant used may easily be determined by a person of skill in the art. In some embodiments, the flame retardant and the plasticiser may be the same material; examples of such materials include dimethyl methylphosphonate (DMMP) and triethyl phosphate (TEP).

In some embodiments, the composition may comprise a catalyst. The catalyst can help to catalyse the reaction between the potassium and/or sodium silicate and the isocyanate. The amount and/or type of catalyst used may easily be determined by a person of skill in the art. In some embodiments, the catalyst may be present in an amount of 0-3%w/w. In some embodiments, the catalyst may be present in an amount of 0-1%w/w. In some embodiments, the catalyst is 2,2'-dimorpholino diethyl ether (DMDEE).

In some embodiments, the composition may comprise a gelling agent. The gelling agent can help increase the early viscosity of the cured composition as well as accelerating curing. This can be useful in rock bolting applications of the composition. A suitable gelling agent is a bifunctional organosilane (e.g. 3-glycidyloxypropyl trimethoxysilane) and/or an acetic acid ester of glycerol, for example monoacetin, diacetin or triacetin.

In some embodiments, the composition may additionally comprise a component (ix) 0-1%w/w dessicant. A suitable dessicant is fumed silica. Where the composition comprises a dessicant, the total amount of components (i)-(ix) is 100%w/w. In some embodiments, the composition may consist essentially of components (i) - (ix). In some embodiments, the composition may consist components (i) - (viii) or of components (i) - (ix).

After the chemical reactions to form the resin are complete, the resin formed has improved adhesive strength. In particular, better adhesive strengths on wet surfaces can be achieved. This is because any surface water will be included in the resin. In contrast, in prior art aqueous silicate systems, surface water is not absorbed by the system; instead, reaction of such a system can generate further surface water. This is because there is water present in the system in excess of that which is required for the resin-forming reaction because the systems are aqueous. On formation of a resin, this excess water is pushed to the surface of the resin. This excess water can further adversely affect the adhesive properties of the resin because it is present at the surface. Thus, it is difficult to adhere prior art systems to wet surfaces.

The resin's properties, whether a brittle or flexible product is required, are also easier to handle. It is also easier to produce a flame retardant resin because the resin formed may comprise inorganic components that do not burn easily. The resin is an organo-mineral system in which two very stable chemical constructions, a silicate system and a urea system, are fused together. This physical strength can have a positive effect on adhesive properties.

According to the invention there is also provided a filled rock bolt comprising a hollow rock bolt having an inlet and an outlet which rock bolt has been filled with the composition according to the invention.

In some embodiments, the inlet and outlet of the rock bolt are sealed, for example sealed to prevent water ingress. The outlet may be sealed by a removable cap. The inlet may be sealed by a resilient plug which provides a substantially water-tight seal between the inlet and the composition according to the invention. The resilient plug is optionally spherical and may have a diameter which is substantially the same as the internal diameter of the hollow rock bolt. The resilient plug may be movable in the hollow rock bolt.

Disclosed is a rock bolting capsule formed from a water impermeable membrane and containing the composition according to the invention and optionally a source of water.

The capsule may comprise a source of water in a compartment formed from a water impermeable membrane. Alternatively, the source of water comprises one or more water capsules, for example plastic or glass capsules containing water.

According to the present invention there is additionally provided a process for hardening a composition prepared by the process as described above, the process comprising the steps of:
(i) providing a composition as prepared by the process described above, and
(ii) hardening the composition by adding water to the composition.

The water may be added through exposure to ambient humidity, or as a liquid (eg by applying the composition to a wet surface).

The invention is illustrated by the following Figures of the accompanying drawings which are not intended to limit the scope of the invention claimed:
**Figure 1** shows a schematic cross-sectional view of a filled rock bolt according to the invention; and
**Figure 2** shows a schematic cross-sectional view of a rock bolting capsule.

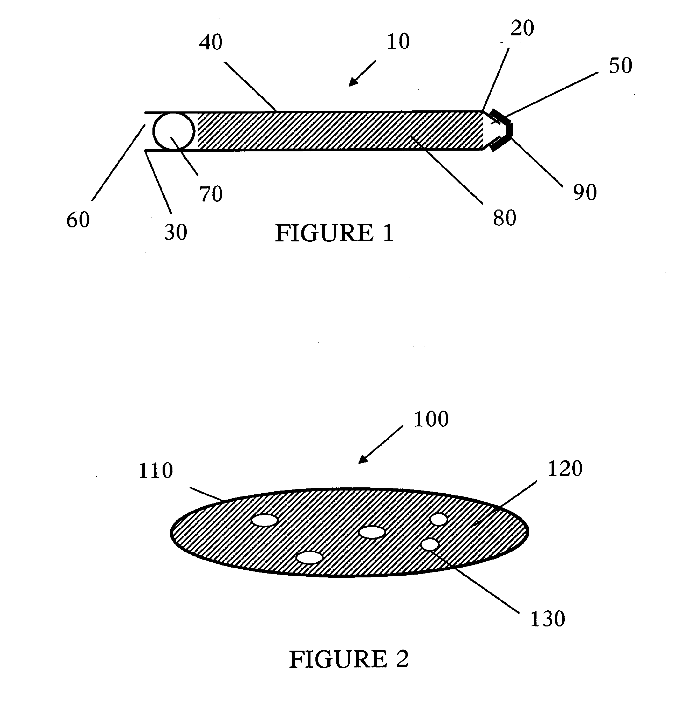

The filled rock bolt 10 shown in Figure 1 has a distal end 20 for insertion into a drilled rock hole (not shown) and a proximal end 30. The rock bolt 10 has a body 40 formed from rolled steel. Body 40 tapers at its distal end 20 to form an outlet 50. Body 40 has an inlet 60 at its proximal end 30. The body 40 is filled with the composition according to the invention 80, inlet 60 is blocked by a resilient plug 70 and outlet 50 is blocked by a cap 90. Resilient plug 70 may be in the form of a rubber ball.

To prepare a filled rock bolt 10 according to the invention, the following steps are performed:
(i) outlet 50 is blocked by a cap 90;
(ii) a composition according to the invention is pumped into an empty hollow rock bolt; and
(iii) inlet 60 is blocked by a resilient plug 70.

To use a filled rock bolt 10 according to the invention, the following method steps are performed:
a rock hole is drilled in a mine or tunnel,
the filled rock bolt 10 is inserted into the rock hole,
an adaptor (not shown) is applied to the proximal end 30 of the filled rock bolt 10 to sealingly engage inlet 60, and
water pressure (approx. 100 bar) is applied through the adaptor on to resilient plug 70 to press the composition according to the invention 80 through the hollow bolt into the rock hole. In the step of applying water pressure, the cap 90 is forced off outlet 50. The resilient plug 70 acts as a substantial seal between the water pressure and the composition according to the invention 80. The resilient plug 70 is too big to be forced out of outlet 50 and so seals outlet 50 against the water pressure. The composition according to the invention fills the rock hole and at least partly encapsulates the bolt, reacting immediately with any water present in the rock hole (for example due to ambient humidity) which results in the curing and hardening of the composition in the rock hole and around the hollow bolt.

Tests of the method of using the filled rock bolt 10 according to the invention have been carried with wet rock holes having a diameter of 34 mm. The filled rock bolts 10 used in the tests had a bolt diameter of 32 mm and a length of 600 mm (which is substantially the same as the rock hole length). The composition used was prepared as described in Example 8 below. The first test resulted in a tensile strength of 268 kN, and the second test showed 271 kN; furthermore the bolt broke in the second test.

The rock bolting capsule 100 shown in Figure 2 has a body 110 formed from a water impermeable film. Body 110 forms a container for the composition according to the invention 120 and water capsules 130. Water capsules 130 are in the form of water filled plastic capsules. As an alternative to water capsules 130, rock bolting capsule 100 may have a water filled chamber. As a further alternative to water capsules 130, where the rock bolting capsule 100 is to be used in a highly humid environment, the capsule 100 may be free from water capsules 130 such that the ambient humidity in the environment is used to cure the composition according to the invention.

To use a rock bolting capsule 100, the following method steps are performed:
a rock hole is drilled in a mine or tunnel,
one or more rock bolting capsules 100 are inserted into the rock hole,
a rock bolt is spun into the rock hole containing the capsules such that the rock bolt disrupts the body 100 of the capsules and the composition according to the invention fills the rock hole and at least partly encapsulates the bolt, reacting immediately with the water in the water capsules 130 and/or in the rock hole which results in the curing and hardening of the composition in the rock hole and around the hollow bolt.

The invention is illustrated by the following examples, which are not intended to limit the scope of the application or of the scope of the claims.

### EXAMPLE 1 - Not according to the invention

A sample of Portil A (Cognis) was spray dried and then dried in an oven such that it had a water content of substantially 0%w/w.

A silicate isocyanate resin-forming composition was prepared by mixing the following components:
60%w/w Aluminium hydroxide, silica sand and CaC0₃
8%w/w Portil A (Trade Mark) from Cognis
0.5%w/w HDK (Trade Mark) from Wacker
30%w/w diphenylmethane-4,4'-diisocyanate prepolymer
1.5%w/w TEP/TCPP

Water (4g, ie 4%w/w) was added to the composition to form a resin. The adhesive strength of the resin (tested according to DIN EN 1542) after 30 minutes was >1MPa.

### EXAMPLE 2 - Not according to the invention

A sample of waterglass (ie sodium silicate) was spray dried and then dried in an oven such that it had a water content of substantially 0%w/w.

A silicate isocyanate resin-forming composition was prepared by mixing the following components:
50%w/w Silimix 260 (Euroquarz GmbH)
30%w/w waterglass powder
19.7%w/w polymeric diphenylmethane-4,4'-diisocyanate
0.3%w/w 2,2'-dimorpholino diethyl ether

Water was added to the composition in an amount of 0.5%w/w to 10%w/w of the total weight of the composition. The compressive strength (tested to ISO 604) of the resulting unfoamed material was 30MPa.

### EXAMPLE 3 - Comparative Example

A silicate isocyanate resin-forming composition was prepared by mixing the following components to form a powder:
90%w/w Silimix 260 (Euroquarz GmbH)
10%w/w Portil A (Cognis) with a water content of 20%w/w

This powder was then mixed with water in a ratio of 10 parts powder to 1 part water. To this mixture was added 1 part liquid polymeric diphenylmethane-4,4'-diisocyanate. The bending strength (tested to ISO 178) of the resulting unfoamed material was 22MPa.

However, it was subsequently found that a composition having such a water content was not storage stable. Accordingly, this example is a comparative example.

### EXAMPLE 4

A silicate isocyanate resin-forming composition was prepared as follows from the following components:
55 w/w% Silimix 260 (sand type)
15 w/w% Portil
29.5 w/w% isocynate (Lupranat M20S from Elastogran)
0.5 w/w% DMDEE (2,2-dimorpholinodiethylether)

Portil was dried at 400°C for 4-5 h to have a water content of almost 0%w/w. Then the Silimix, Portil and isocyanate components were added together in the proportions indicated above and stirred in a closed cup with 3000 revolutions per minute for 60 sec.

An accelerated storage test was performed on the composition thus obtained. After 1 week at 50°C (which is similar to 10 weeks storage at 22°C), no solidification was observed. After mixing with sufficient water to cure the composition, the bending strength (tested to ISO 178) of the resulting unfoamed material was over 20MPa.

This example was repeated using an isocyanate component containing 85%w/w of Lupranat M20S from Elastogran and 15%w/w of one of: dimethylmethylphosphonate (DMMP), triethylphosphate (TEP), butyl diglycolacetate (BDGA) and dibasic ester (DBE). Similar results were obtained with each composition.

### EXAMPLE 5

A silicate isocyanate resin-forming composition was prepared as follows from the following components:
50 parts by weight Silimix 260 (sand type)
15 parts by weight Portil
7,5 parts by weight Diethylhexyladipate (DOA)
29,5 parts by weight isocynate (Lupranat M20S from Elastogran)
0,5 parts by weight DMDEE (2,2-dimorpholinodiethylether)

Portil was dried at 400°C for 4-5 h to have a water content of almost 0%w/w. Then the other components were added together in the proportions indicated above and stirred in a closed cup with 3000 revolutions per minute for 60 sec.

An accelerated storage test was performed on the composition thus obtained. After 1 week at 50 °C (which is similar to 10 weeks storage at 22°C), no solidification was observed. After mixing with sufficient water to cure the composition, the bending strength (tested to ISO 178) of the resulting unfoamed material was over 20MPa.

### EXAMPLE 6

A silicate isocyanate resin-forming composition was prepared as follows from the following components:
50 parts by weight Silimix 260 (sand type)
15 parts by weight Portil
7,5 parts by weight Triacetin
29,5 parts by weight isocynate (Lupranat M20S from Elastogran)
0,5 parts by weight DMDEE (2,2-dimorpholinodiethylether)

Portil was dried at 400°C for 4-5 h to have a water content of almost 0%w/w. Then the other components were added together in the proportions indicated above and stirred in a closed cup with 3000 revolutions per minute for 60 sec.

An accelerated storage test was performed on the composition thus obtained. After 1 week at 50 °C (which is similar to 10 weeks storage at 22°C), no solidification was observed. After mixing with sufficient water to cure the composition, the bending strength (tested to ISO 178) of the resulting unfoamed material was over 20MPa.

### EXAMPLE 7

A silicate isocyanate resin-forming composition was prepared as follows from the following components:
55 w/w% Silimix 260 (sand type)
15 w/w% Portil
29.5 w/w% isocynate (Lupranat M 200R from Elastogran)
0.5 w/w% DMDEE (2,2-dimorpholinodiethylether)

Portil was dried at 400°C for 4-5 h to have a water content of almost 0%w/w. Then the Silimix, Portil and isocyanate components were added together in the proportions indicated above and stirred in a closed cup with 3000 revolutions per minute for 60 sec.

An accelerated storage test was performed on the composition thus obtained. After 1 week at 50 °C (which is similar to 10 weeks storage at 22°C), no solidification was observed. After mixing with sufficient water to cure the composition, the bending strength (tested to ISO 178) of the resulting unfoamed material was over 20MPa.

### EXAMPLE 8 - Not according to the invention

A silicate isocyanate resin-forming composition was prepared by first mixing the following isocyanate composition:
81 w/w% prepolymer (NCO content 29%)
15 w/w% butyl diglycolacetate
3 w/w% Dynasylan Glymo (containing 3-glycidyloxypropyl trimethoxysilane)
0,5 % Diethylmalonate
0,5 % DMDEE (2,2-dimorpholinodiethylether)

The silicate isocyanate resin-forming composition was then prepared by mixing the following:
20 w/w% Isocyanate composition as prepared above;
20 w/w% Sodium metasilicate having a water content of about 0%
0,1 w/w% HDK H18 (fumed silica from Wacker)
59,9 w/w% Silimix 260

The sodium metasilicate was prepared as described above to have a water content of about 0%w/w. The composition was used as described above in a filled rock bolt according to the invention and then its tensile strength was measured and found to be 268kN and 271 kN. with a borehole diameter of 34mm and length of 600mm.

### COMPARATIVE EXAMPLE 1

A resin-forming composition was prepared by mixing the following components:
80%w/w Silimix 260 (Euroquarz GmbH)
19.7%w/w polymeric diphenylmethane-4,4'-diisocyanate
0.3%w/w 2,2'-dimorpholino diethyl ether

Water was added to the composition in an amount of 0.5%w/w to 10%w/w of the total weight of the composition. The composition foamed.

### COMPARATIVE EXAMPLE 2

A resin-forming composition was prepared by mixing Silimix 260 (Euroquarz GmbH) powder with water in a ratio of 10 parts powder to 1 part water. To this mixture was added 1 part liquid polymeric diphenylmethane-4,4'-diisocyanate. The composition foamed.

### COMPARATIVE EXAMPLE 3

A composition was also prepared by mixing the following components:
68%w/w Al(OH)₃, Al₂O₃, AlO(OH), sand, sandstone, limestone and
CaCO₃
0.5%w/w HDK
30%w/w diphenylmethane-4,4'-diisocyanate prepolymer
1.5%w/w TEP/TCPP

Water (4g, ie 4%w/w) was added to the composition and the adhesive strength (tested according to DIN EN 1542) of the foamed product after 30 minutes was <0.5MPa.

## Claims

1. A process for preparing a storage stable composition, the process comprising the steps of:
(i) oven drying a potassium silicate and/or sodium silicate for 4-5 hours at 400°C to form a silicate powder having a water content of substantially 0%w/w; and
(ii) mixing the silicate powder with an isocyanate.

2. A process as claimed in claim 1, wherein the potassium silicate and/or sodium silicate powder has a median principal dimension of 0.02 mm-0.4 mm.

3. A process as claimed in claim 1 or claim 2, wherein the molecular ratio of SiO₂ to K₂O in the silicate powder is from 0.5:1 to 4.1:1.

4. A process as claimed in claim 3, wherein the molecular ratio is from 0.6:1 to 3.4:1.

5. A process as claimed in any one of claims 1 to 4, wherein the molecular ratio of SiO₂ to Na₂O in the silicate powder is from 0.5:1 to 4.4:1.

6. A process as claimed in claim 5, wherein the molecular ratio is from 0.6:1 to 2.5:1.

7. A process as claimed in any one of claims 1 to 6, wherein the isocyanate is an aliphatic, cycloaliphatic, araliphatic, aromatic or heterocyclic isocyanate, a distillation residue with isocyanate groups or an isocyanate prepolymer.

8. A process as claimed in claim 7, wherein the isocyanate is diphenylmethane-4,4'-diisocyanate.

9. A process as claimed in any one of claims 1 to 8 wherein the composition comprises:
(i) 5-40%w/w of the potassium silicate and/or sodium silicate powder;
(ii) 5-50%w/w of the isocyanate;
(iii) 0-1%w/w emulsifier/thixotropic agent;
(iv) 30-90%w/w filler;
(v) 0-10%w/w plasticiser;
(vi) 0-3%w/w catalyst;
(vii) 0-5%w/w flame retardant; and
(viii) 0-10%w/w gelling agent,
wherein the total amount of components (i)-(viii) is 100%w/w.

10. A process for hardening a composition prepared by the process as claimed in any one of claims 1 to 9, the process comprising the steps of:
(i) providing a composition as prepared by the process claimed in any one of claims 1 to 9; and
(ii) hardening the composition by adding water to the composition.

11. A filled rock bolt comprising a hollow rock bolt having an inlet and an outlet, the rock bolt being filled with the composition prepared by the process as defined in any one of claims 1 to 9.

## Patentansprüche

1. Ein Prozess zur Vorbereitung einer lagerstabilen Zusammensetzung, der Prozess bestehend aus den folgenden Schritten:
(i) Ofentrocknung von Kaliumsilikat und/oder Natriumsilikat während 4-5 Stunden bei 400°C, um ein Silikatpulver mit einem Wassergehalt von substantiell 0 Gew.-% zu erhalten; und
(ii) Mischen des Silikatpulvers mit einem Isozyanat.

2. Ein Prozess wie in Anspruch 1 gefordert, wobei das Kaliumsilikat- und/oder Natriumsilikat-Pulver eine mittlere Hauptgröße von 0,02 mm-0,4 mm aufweist.

3. Ein Prozess wie in Anspruch 1 oder Anspruch 2 gefordert, wobei das Molekularverhältnis von SiO₂ zu K₂O im Silikatpulver bei 0,5:1 bis 4,1:1 liegt.

4. Ein Prozess wie in Anspruch 3 gefordert, wobei das Molekularverhältnis bei 0,6:1 bis 3,4:1 liegt.

5. Ein Prozess wie in einem der Ansprüche 1 bis 4 gefordert, wobei das Molekularverhältnis von SiO₂ zu Na₂O im Silikatpulver bei 0,5:1 bis 4,4:1 liegt.

6. Ein Prozess wie in Anspruch 5 gefordert, wobei das Molekularverhältnis bei 0,6:1 bis 2,5:1 liegt.

7. Ein Prozess wie in einem der Ansprüche 1 bis 6 gefordert, wobei das Isozyanat ein aliphatisches, cycloaliphatisches, araliphatisches, aromatisches oder heterozyklisches Isozyanat, ein Destillationsrest aus Isozyanat-Gruppen oder ein Isozyanat-Prepolymer ist.

8. Ein Prozess wie in Anspruch 7 gefordert, wobei das Isozyanat Diphenylmethan-4,4'-diisocyanat ist.

9. Ein Prozess wie in einem der Ansprüche 1 bis 8 gefordert, wobei die Zusammensetzung Folgendes umfasst:
(i) 5-40 Gew.-% des Kaliumsilikat- und/oder Natriumsilikat-Pulvers;
(ii) 5-50 Gew.-% des Isozyanat;
(iii) 0-1 Gew.-% Emulgierungs-/Thixotropiermittel;
(iv) 30-90 Gew.-% Füllstoff;
(v) 0-10 Gew.-% Weichmacher;
(vi) 0-3 Gew.-% Katalysator;
(vii) 0-5 Gew.-% Flammschutzmittel; und
(viii) 0-10 Gew.-% Geliermittel,
wobei die Gesamtmenge der Komponenten (i)-(viii) 100 Gew.-% beträgt.

10. Ein Prozess zur Härtung einer Zusammensetzung, die nach dem in einem der Ansprüche 1 bis 9 geforderten Prozess vorbereitet wird, der Prozess bestehend aus den folgenden Schritten:
(i) Bereitstellung einer Zusammensetzung, die nach dem in einem der Ansprüche 1 bis 9 geforderten Prozess vorbereitet wird; und
(ii) Härtung der Zusammensetzung durch Hinzufügen von Wasser zu der Zusammensetzung.

11. Ein gefüllter Felsanker, bestehend aus einem hohlen Felsanker mit einem Einlass und einem Auslass, der Felsanker wird dabei mit der Zusammensetzung gefüllt, die gemäß des Prozesses, wie er in einem der Ansprüche von 1 bis 9 definiert ist, vorbereitet wird.

## Revendications

1. Un processus de préparation d'une composition stable en stockage, le processus comprenant les opérations suivantes :
(i) le séchage au four d'un silicate de potassium et/ou d'un silicate de sodium pendant 4 à 5 heures à 400°C de façon à former une poudre de silicate possédant une teneur en eau de sensiblement 0% poids/poids, et
(ii) le mélange de la poudre de silicate avec un isocyanate.

2. Un processus selon la Revendication 1, où la poudre de silicate de potassium et/ou de silicate de sodium possède une dimension principale médiane de 0,02 mm à 0,4 mm.

3. Un processus selon la Revendication 1 ou 2, où le rapport moléculaire de SiO₂ sur K₂O dans la poudre de silicate est de 0,5:1 à 4,1:1.

4. Un processus selon la Revendication 3, où le rapport moléculaire est de 0,6:1 à 3,4:1.

5. Un processus selon l'une quelconque des Revendications 1 à 4, où le rapport moléculaire de SiO₂ sur Na₂O dans la poudre de silicate est de 0,5:1 à 4,4:1.

6. Un processus selon la Revendication 5, où le rapport moléculaire est de 0,6:1 à 2,5:1.

7. Un processus selon l'une quelconque des Revendications 1 à 6, où l'isocyanate est un isocyanate aliphatique, cycloaliphatique, araliphatique, aromatique ou hétérocyclique, un résidu de distillation avec des groupes isocyanate ou un prépolymère d'isocyanate.

8. Un processus selon la Revendication 7, où l'isocyanate est diphénylméthane-4,4'-diisocyanate.

9. Un processus selon l'une quelconque des Revendications 1 à 8 où la composition contient :
(i) 5 à 40% poids/poids de la poudre de silicate de potassium et/ou de silicate de sodium,
(ii) 5 à 50% poids/poids de l'isocyanate,
(iii) 0 à 1% poids/poids d'un agent émulsifiant/thixotropique,
(iv) 30 à 90% poids/poids de charge,
(v) 0 à 10% poids/poids de plastifiant,
(vi) 0 à 3% poids/poids de catalyseur,
(vii) 0 à 5% poids/poids de produit ignifuge, et
(viii) 0 à 10% poids/poids d'agent gélifiant,
où la quantité totale des composants (i) à (viii) est de 100% poids/poids.

10. Un processus de durcissement d'une composition préparée par le processus selon l'une quelconque des Revendications 1 à 9, le processus comprenant les opérations suivantes :
(i) la fourniture d'une composition préparée par le processus selon l'une quelconque des Revendications 1 à 9, et
(ii) la durcissement de la composition par l'ajout d'eau à la composition.

11. Un boulon d'ancrage rempli comprenant un boulon d'ancrage creux possédant une admission et une sortie, le boulon d'ancrage étant rempli avec la composition préparée par le processus défini dans l'une quelconque des Revendications 1 à 9.
